# FASCICULE DE BREVET EUROPEEN

(11) **EP 2 127 995 B1**
(45) Date de publication et mention de la délivrance du brevet: **20.07.2011**
(21) Numéro de dépôt: 09161003.0
(22) Date de dépôt: 25.05.2009
(51) Int. Cl.: B62B 7/08

(54) **Châssis de poussette pour enfant à deux positions pliées, et poussette correspondante**
Kinderwagengestell mit zwei Klapppositionen und entsprechender Kinderwagen
Chassis of a pushchair with two folded positions, and corresponding pushchair

(30) Priorité: 28.08.2008 FR 0855779; 26.05.2008 FR 0853423
(43) Date de publication de la demande: 02.12.2009
(73) Titulaire: Dorel France SA, 49309 Cholet Cedex (FR)
(72) Inventeur: Zweideck, Bruno, 49300, CHOLET (FR); Ageneau, Laurent, 85290, SAINT LAURENT SUR SEVRE (FR)
(74) Mandataire: Bioret, Ludovic

(56) Documents cités:
- EP-A- 0 577 496
- EP-A- 1 170 192
- CN-A- 101 104 413
- IT-A1- MI20 070 460
- JP-A- 2 234 876

## Description

### 1. Domaine de l'invention

Le domaine de l'invention est celui des poussettes pour enfant. Plus précisément, l'invention concerne l'amélioration du pliage et du dépliage des poussettes, et notamment l'adaptation de ce pliage aux besoins et aux conditions rencontrés par l'utilisateur.

### 2. Art antérieur

### Structure des poussettes

On connaît de nombreux types de poussettes, qui sont généralement classées en fonction de leur mode de pliage. Beaucoup de ces poussettes sont sensiblement symétriques, et leur châssis présente deux ensembles latéraux comportant généralement chacun un support de roue avant (ou brancard avant) portant une roue avant, un support de roue arrière (ou brancard arrière) portant une roue arrière, et un élément de poussoir (ou poussoir). Ces éléments latéraux sont situés respectivement dans deux plans sensiblement parallèles l'un à l'autre et parallèles au plan de symétrie de la poussette, et sont liés l'un à l'autre par d'autres éléments de la poussette.

Il est à noter que le terme « roue » désigne indifféremment, dans le présent document, une roue unique de la poussette ou un bloc de deux roues jumelées.

### Pliage des poussettes

D'une façon générale, les concepteurs de poussettes tentent de proposer des poussettes à encombrement réduit, en position pliée, et à pliage et à dépliage simples et intuitifs. Parmi les différents types de pliage, on distingue notamment des pliages à plat, ou pliages en deux dimensions (appelés par la suite « pliages 2D »), et des pliages compacts, ou pliages en trois dimensions (appelés par la suite « pliages 3D »).

Dans un pliage 2D, les poussoirs, les brancards avant et les brancards arrière de la poussette sont ramenés sensiblement dans le plan défini par les roues. Les positions des ensembles latéraux droit et gauche, l'un par rapport à l'autre, c'est-à-dire l'écartement entre les deux ensembles latéraux, ne changent pas entre la position pliée et la position dépliée de la poussette. On obtient ainsi un pliage simple. En revanche, le volume de la poussette pliée reste relativement important.

Dans un pliage 3D, des moyens de modification de l'écartement sont prévus pour rapprocher les ensembles latéraux l'un de l'autre, de façon à obtenir un ensemble plié très compact. Ce pliage est généralement assuré par l'intermédiaire de croisillons reliant les ensembles latéraux droit et gauche. Un croisillon, au sens du présent document, est un ensemble d'au moins deux tiges pouvant pivoter les unes par rapport aux autres de façon à prendre plusieurs positions. Ces tiges peuvent par exemple former un X articulé, un ensemble de parallélogrammes déformables, ou un compas.

Ces croisillons sont liés cinématiquement à des éléments de chacun des ensembles latéraux afin de lier leur pliage au pliage des ensembles latéraux et rendre le pliage 3D facile à mettre en oeuvre. Un exemple d'un tel pliage en trois dimensions est illustré dans le document de brevet EP 0 577 496, au nom du demandeur de la présente demande de brevet.

Ce type de pliage permet d'obtenir un faible encombrement en position pliée, mais s'avère incompatible avec certains équipements pouvant être utilisés sur le châssis pliable, tels qu'une nacelle, ou une coque, rigide, ou un hamac non pliable. Ceci oblige donc à limiter l'usage d'un tel pliage aux hamacs pliables (qui sont généralement moins confortables que les hamacs rigides), ou à procéder avant chaque pliage au retrait du dispositif de transport d'enfant (nacelle, coque, hamac...).

Le document de brevet ITMI20070460 décrit un châssis pliable de poussette selon le préambule de la revendication 1. Ce châssis permet d'obtenir deux types de pliage, un pliage à plat et un pliage compact. Cependant ce châssis ne divulgue pas de moyens permettant d'effectuer simultanément le pliage et le rapprochement des éléments latéraux lors du pliage compact.

### 3. Objectifs de l'invention

L'invention a notamment pour objectif de pallier ces inconvénients de l'art antérieur.

Plus précisément, un objectif de l'invention est de fournir une poussette, et un châssis de poussette, dont le pliage soit optimisé en fonction des besoins et des attentes de l'utilisateur.

Ainsi, notamment, un objectif de l'invention est de fournir une telle poussette, dont l'encombrement peut être fortement réduit, lorsque ceci est nécessaire.

Un autre objectif de l'invention est de fournir, pour cette poussette, un pliage simple et rapide, et adapté à la présence d'un hamac, d'une coque ou d'une nacelle non pliables, toujours lorsque ceci est nécessaire.

Un autre objectif de l'invention est de fournir une telle poussette qui soit simple et peu coûteuse à réaliser.

L'invention a également pour objectif de fournir une telle poussette, dont les manipulations pour le pliage et le dépliage sont simples, limitées en nombre et intuitives pour l'utilisateur.

### 4. Présentation de l'invention

Ces objectifs, ainsi que d'autres qui apparaîtront plus clairement par la suite, sont atteints à l'aide d'un châssis pliable de poussette pour enfant.

selon la revendication 1.

Il est ainsi possible d'obtenir deux positions de pliage distinctes pour une même poussette, l'une en 2D et l'autre en 3D, grâce à une simple modification apportée aux châssis des poussettes connues.

Ces moyens d'accouplement sélectif peuvent s'apparenter à un couplage ou à un embrayage unidirectionnel, qui peut être mis en oeuvre très facilement, et ne suppose aucune action de l'utilisateur pour passer dans une position active (ou « embrayée » par la suite, c'est-à-dire dans une configuration dans laquelle elle transmet un mouvement) ou dans une position inactive (ou « débrayée » par la suite, c'est-à-dire dans une configuration dans laquelle elle ne transmet pas de mouvement).

Préférentiellement, lesdits moyens d'accouplement sélectif sont dans ledit état actif lorsque le pliage est effectué en agissant sur lesdits moyens de contrôle de l'écartement, et dans ledit état inactif lorsque le pliage est effectué en agissant sur lesdits ensembles latéraux.

Ainsi, si on agit sur les éléments latéraux pour les plier, les éléments de liaison cinématique sont débrayés, et on obtient un pliage 2D du châssis, et donc de la poussette. Si on agit sur les moyens de contrôle du pliage compact pour rapprocher les ensembles latéraux l'un de l'autre les éléments de liaison cinématique sont embrayés et forcent le pliage de chaque ensemble latéral. On obtient ainsi un pliage 3D du châssis, et donc de la poussette. L'utilisateur de la poussette peut ainsi choisir très facilement de plier sa poussette en 2D ou en 3D.

Selon un premier mode de réalisation avantageux de l'invention, lesdits moyens d'accouplement sélectif sont constituées par une liaison souple, dans l'état actif quand elle est sollicitée en traction (tendue) et dans l'état inactif quand elle est sollicitée en compression (non tendue ou détendue).

Une telle liaison souple permet de mettre en oeuvre l'invention très facilement, en remplaçant une biellette rigide d'une cinématique de poussette connue.

Avantageusement, ladite liaison souple appartient au groupe comprenant les sangles, les chaînes, les câbles, et les ensembles de biellettes articulées.

Selon un mode de réalisation avantageux, lesdits moyens de contrôle de l'écartement comprennent un ensemble d'au moins deux tiges formant au moins un croisillon reliant lesdits ensembles latéraux.

Notamment, ledit au moins un croisillon peut relier les brancards arrière desdits ensembles latéraux.

Préférentiellement, les extrémités supérieures desdits moyens de contrôle de l'écartement portent une pièce de guidage coulissant sur ledit brancard arrière correspondant.

De préférence, dans ce cas, ladite liaison souple lie ladite pièce de guidage à une bielle reliant un brancard avant et un brancard arrière de l'ensemble latéral correspondant.

Selon un autre mode de réalisation de l'invention, lesdits moyens d'accouplement sélectif comprennent au moins une liaison coulissante d'une pièce de liaison dans une rainure, lesdits moyens d'accouplement sélectif étant dans ledit état actif lorsque ladite pièce de liaison est en butée contre une extrémité de ladite rainure, et dans ledit état inactif quand ladite pièce de liaison peut coulisser dans ladite rainure.

Dans ce cas, dans une mise en oeuvre particulière, ladite rainure peut être formée dans un élément d'un desdits ensembles latéraux, et ladite pièce de liaison est montée à l'extrémité d'une tige d'un croisillon formant lesdits moyens de contrôle de l'écartement.

Selon un mode de réalisation particulier de l'invention, le châssis comporte un mécanisme de verrouillage de la position pliée du châssis, présentant :
- des premiers moyens de verrouillage en position pliée d'un desdits éléments latéraux ;
- des seconds moyens de verrouillage en position pliée desdits moyens de contrôle de l'écartement ;
- des moyens de déverrouillage assurant le déverrouillage simultané desdits premiers et seconds moyens de verrouillage.

Un tel mécanisme de verrouillage peut avantageusement verrouiller la position pliée du châssis, et donc de la poussette, tant en pliage 2D qu'en pliage 3D. Une même action permet avantageusement de la déverrouiller dans ces deux positions de pliage.

L'invention concerne également une poussette comprenant un tel châssis et des moyens de support et de maintien d'au moins un élément amovible de transport d'un enfant, pouvant appartenir notamment au groupe comprenant les hamacs pliables, les hamacs non pliables, et les nacelles.

Bien évidemment, elle concerne également une poussette constituée d'un châssis sur lequel est monté un hamac pliable non amovible.

### 5. Liste des figures

D'autres caractéristiques et avantages de l'invention apparaîtront plus clairement à la lecture de la description suivante de modes de réalisation préférentiels, donnés à titre de simples exemples illustratifs et non limitatifs, et des dessins annexés, parmi lesquels :
- la figure 1 est une vue de côté du châssis d'une poussette selon un premier mode de réalisation de l'invention, en position complètement dépliée ;
- la figure 2 est une vue de l'arrière du châssis de la figure 1, également en position complètement dépliée ;
- les figures 3A et 3B sont des vues de côté analogue à la figure 1 du châssis en cours de pliage, respectivement :

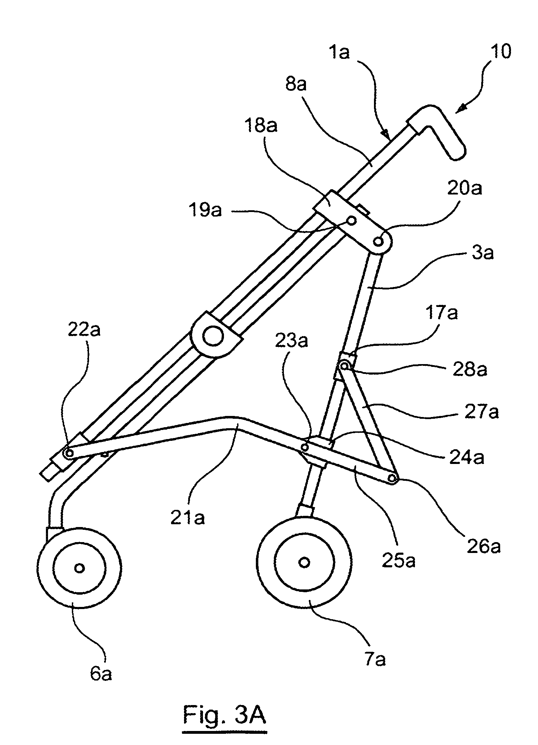

   - figure 3A : pour un pliage 3D ;

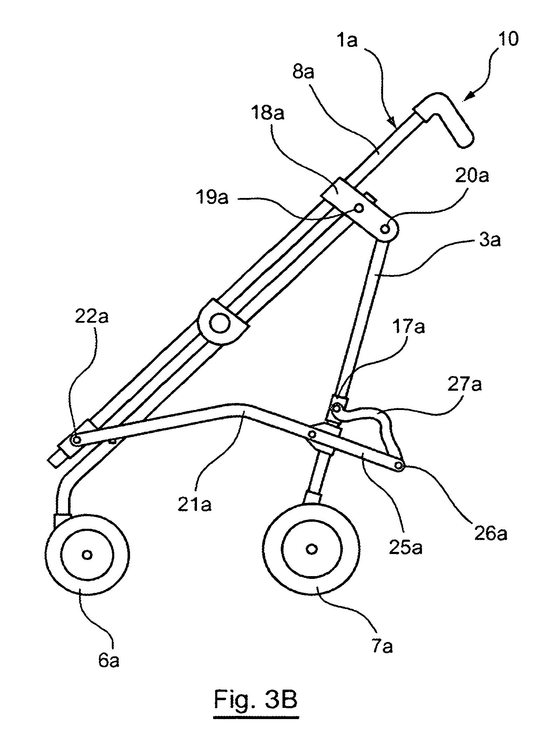

   - figure 3B : pour un pliage 2D ;

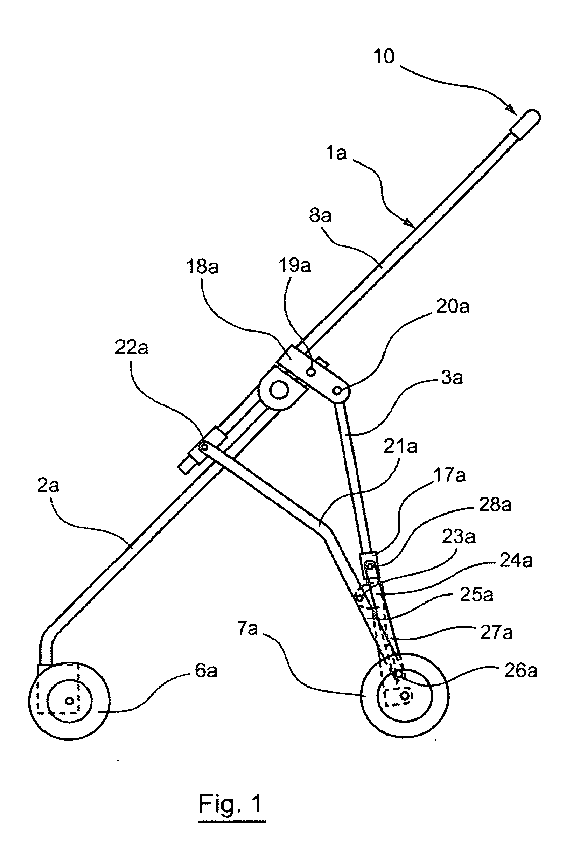

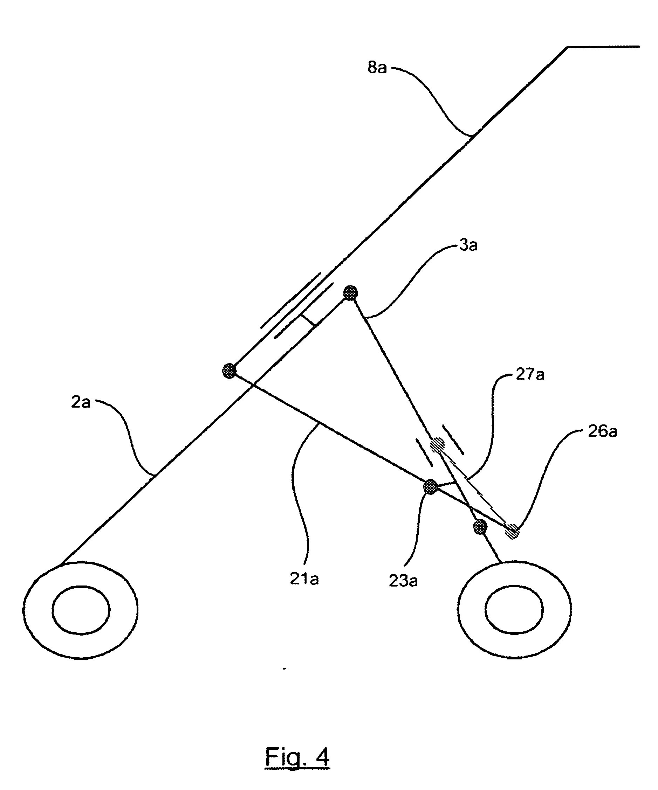

- les figures 4 à 8 illustrent schématiquement les deux cinématiques de pliage du châssis de la figure 1 :
   - figure 4 : châssis déplié ;

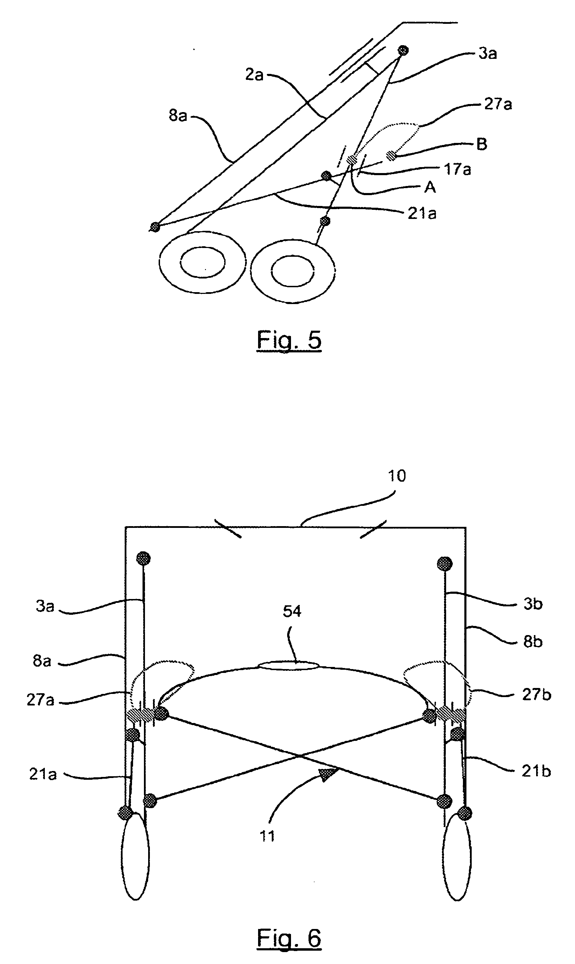

   - figures 5 et 6 : châssis plié en 2D, les liaisons souples étant détendues, vue respectivement de côté et de derrière ;

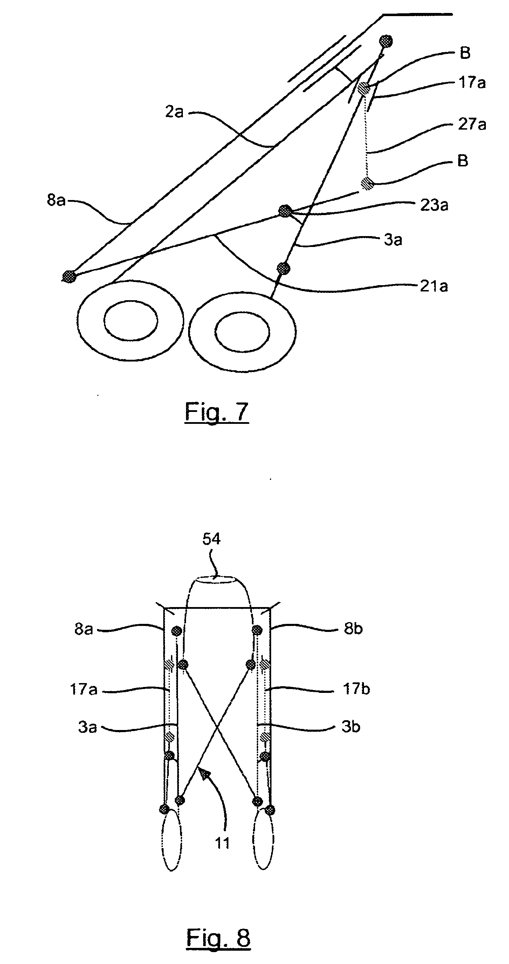

   - figures 7 et 8: châssis plié en 3D, les liaisons souples étant tendues, vue respectivement de côté et de derrière ;

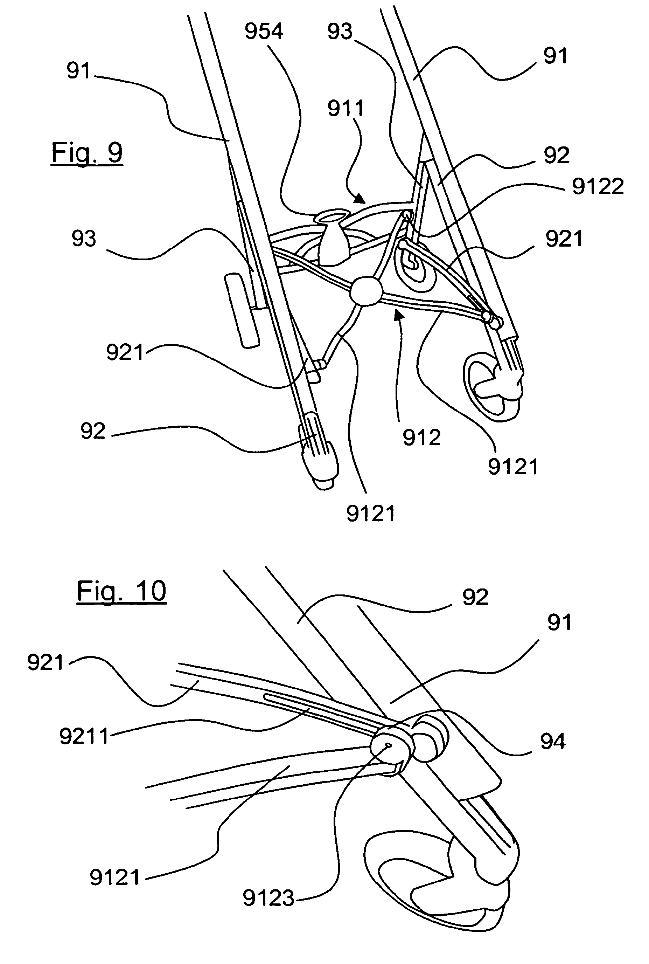

- la figure 9 est une vue du châssis d'une poussette selon un second mode de réalisation de l'invention, en position complètement dépliée ;
- la figure 10 est une vue de détail du châssis de la figure 9, également en position complètement dépliée ;

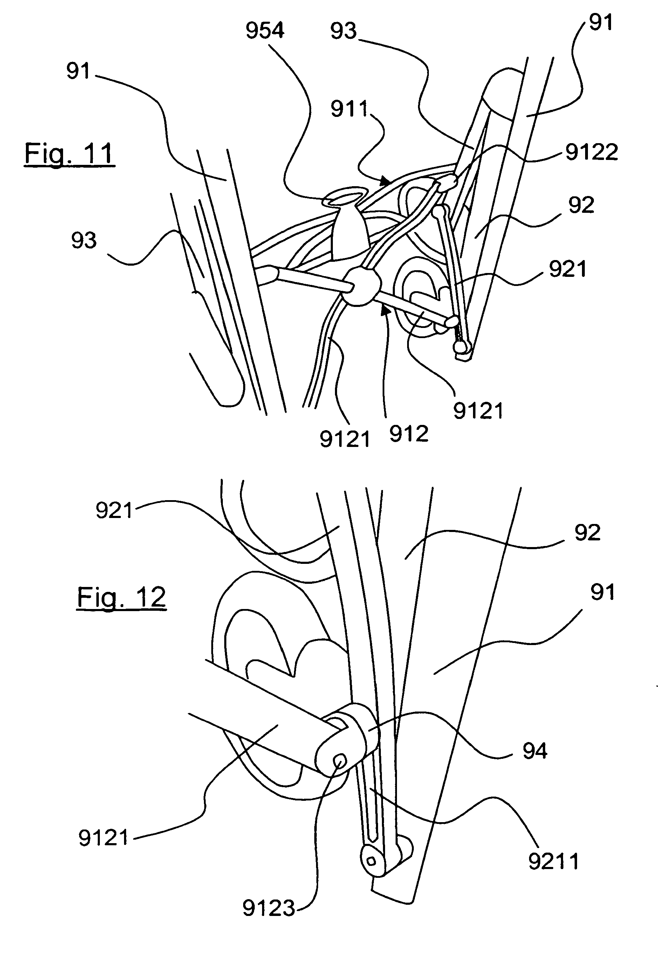

- la figure 11 est une vue du châssis de la figure 9, en position de pliage 2D ;
- la figure 12 est une vue de détail du châssis de la figure 9, également en position de pliage 2D ;

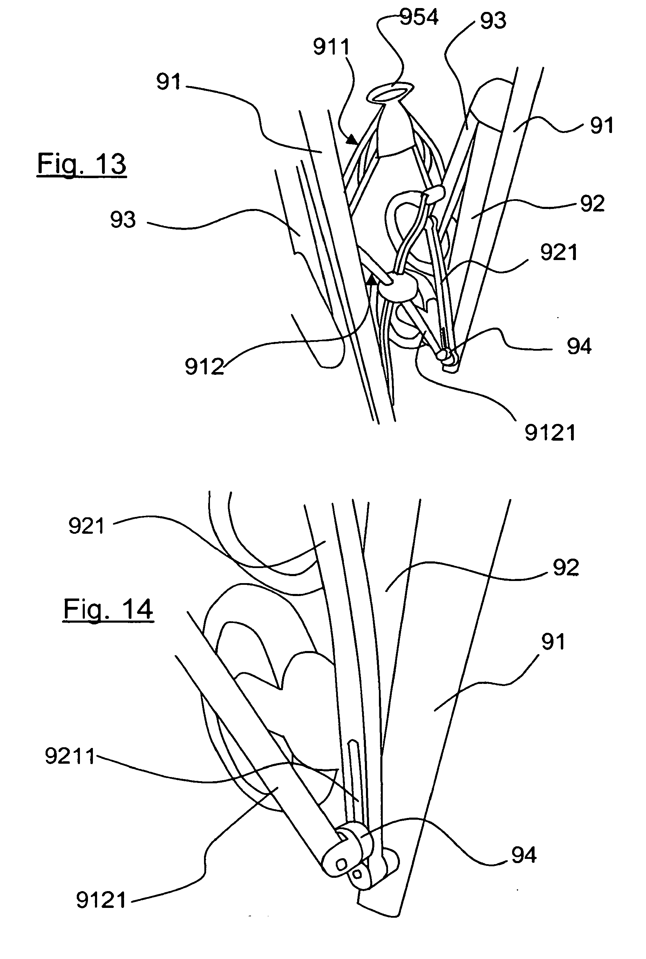

- la figure 13 est une vue du châssis de la figure 9, en position de pliage 3D ;
- la figure 14 est une vue de détail du châssis de la figure 9, également en position de pliage 3D ;

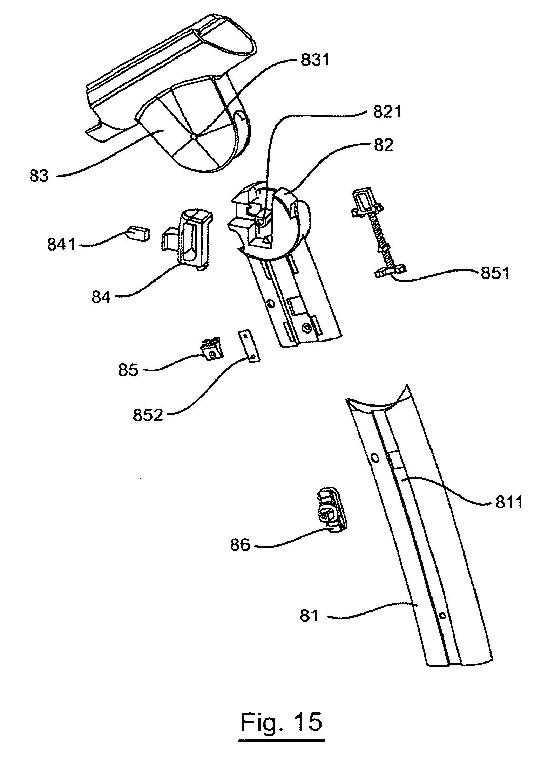

- la figure 15 est une vue éclatée des éléments constitutifs d'un mécanisme de verrouillage de la position de pliage d'une poussette selon un mode de réalisation de l'invention ;

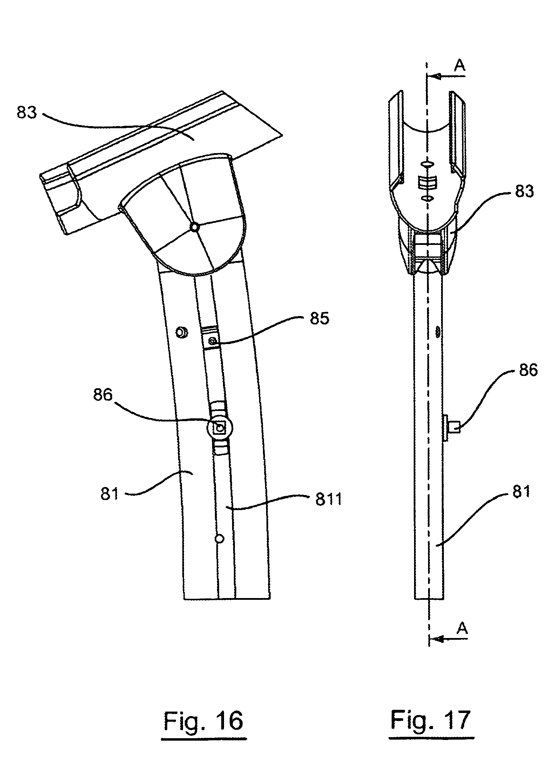

- les figures 16 à 18 sont des vues du mécanisme de verrouillage de la figure 15 dans la position dépliée de la poussette, respectivement en vue de coté, en vue de face et en section ;

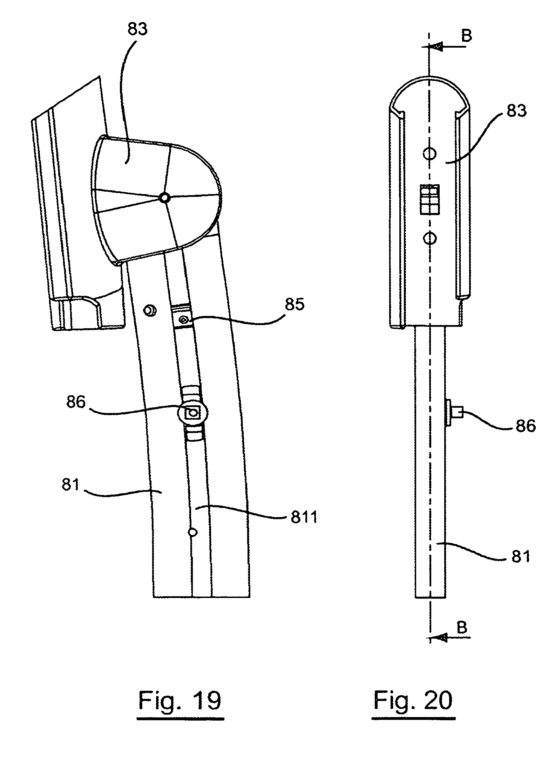

- les figures 19 à 21 sont des vues du mécanisme de verrouillage de la figure 15 dans la position de pliage 2D de la poussette, respectivement en vue de coté, en vue de face et en section ;

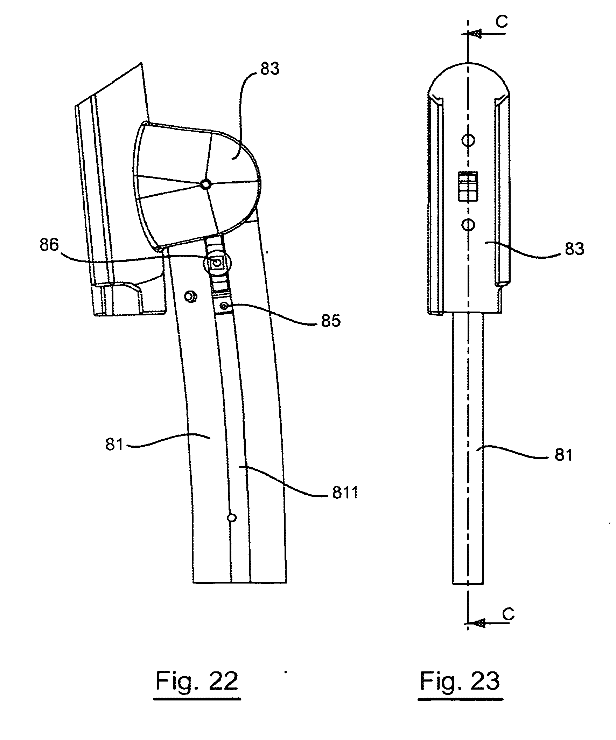

- les figures 22 à 25 sont des vues du mécanisme de verrouillage de la figure 15 dans la position de pliage 3D de la poussette, respectivement en vue de coté, en vue de face et deux vues en section ;

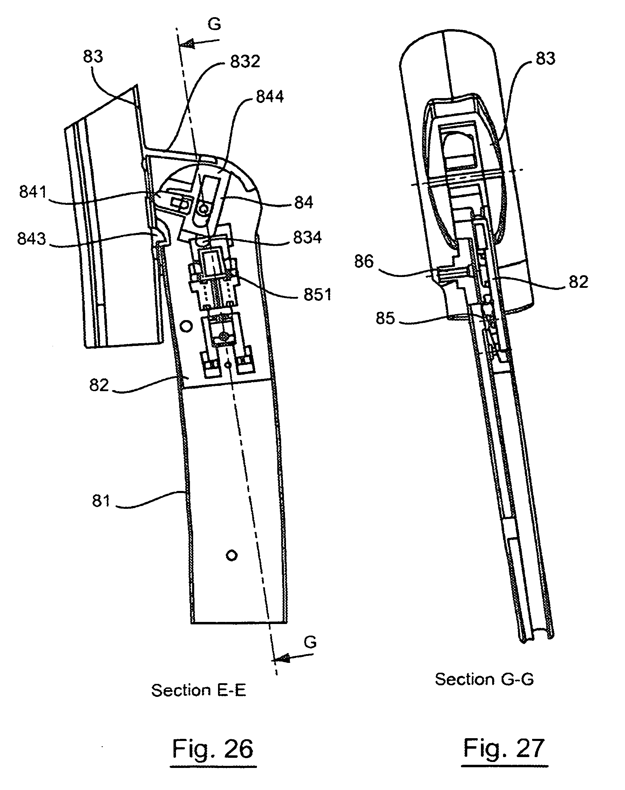

- les figures 26 et 27 sont des vues en section du mécanisme de verrouillage de la figure 15 dans la position de pliage 3D de la poussette, après une action sur le bouton de déverrouillage ;

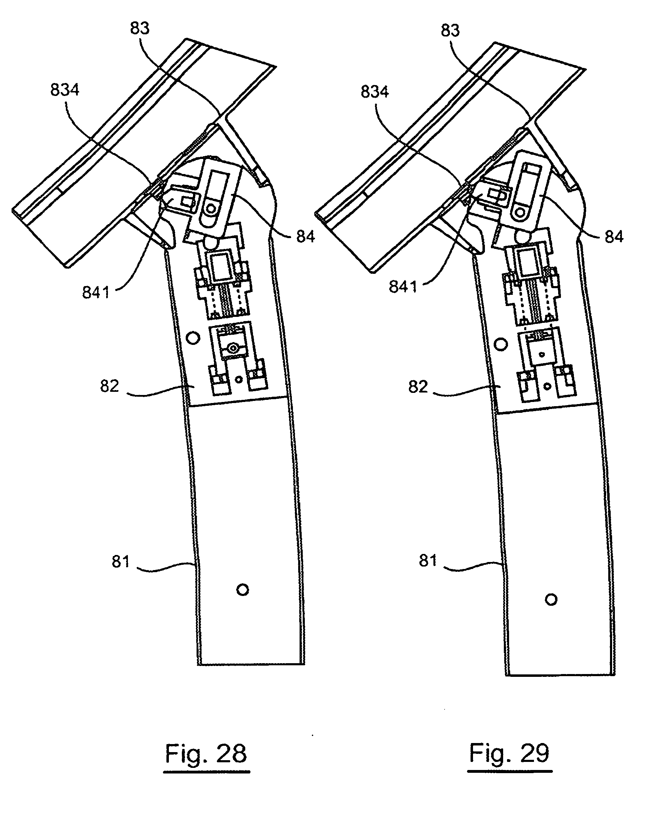

- les figures 28 et 29 sont des vues en section du mécanisme de verrouillage de la figure 15 dans des positions de la poussette intermédiaires entre la position pliée et la position dépliée ;

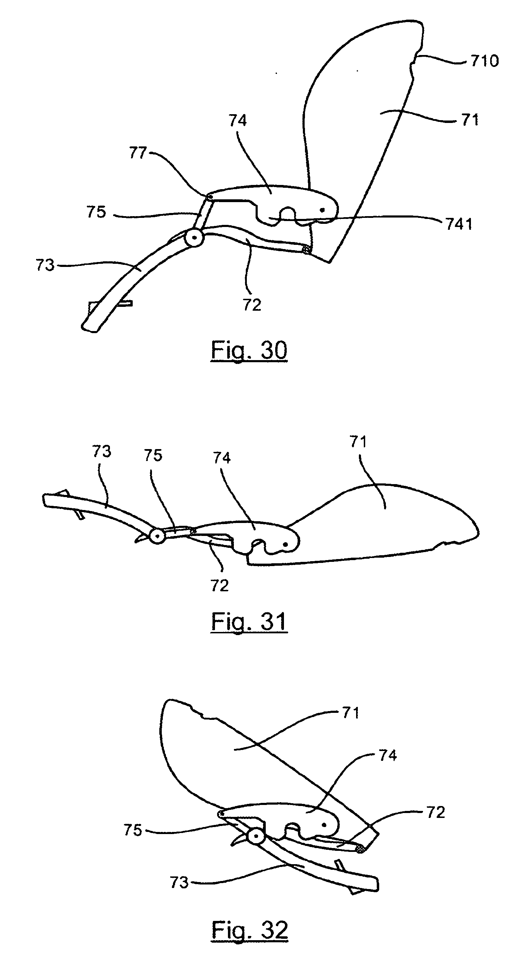

- la figure 30 illustre un exemple de hamac utilisable dans une poussette selon l'invention, vu de côté, dans une position assise ;
- la figure 31 présente le hamac de la figure 30 dans une position allongée ;
- la figure 32 présente le hamac de la figure 30 dans sa position de stockage en dehors du châssis ;

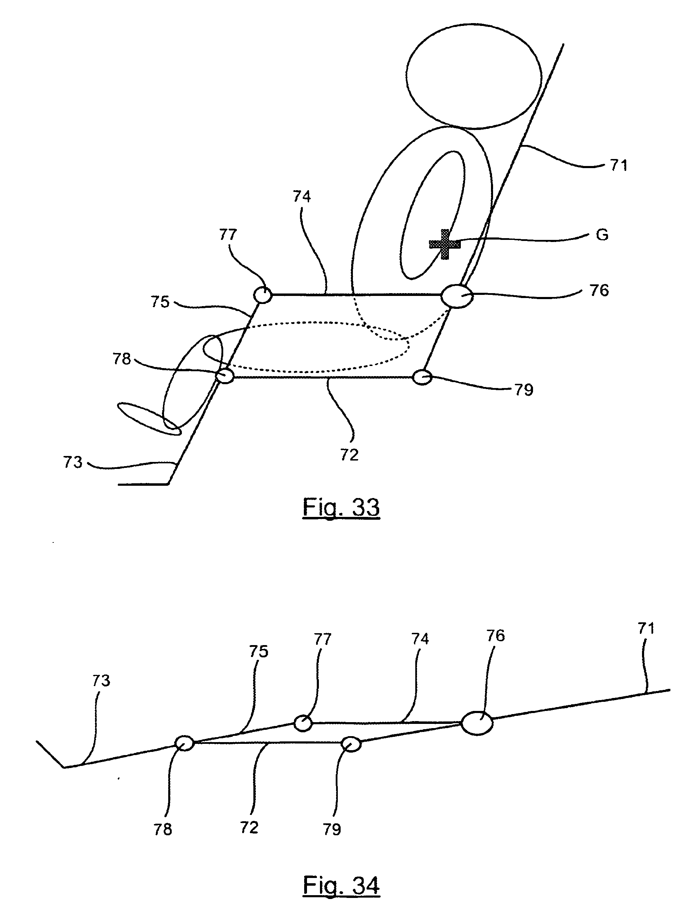

- les figures 33 et 34 illustrent schématiquement la cinématique du hamac de la figure 30, respectivement dans la position assise et allongée.

### 6. Description de modes de réalisation

### 6.1 Principe de l'invention

Comme expliqué ci-dessus, l'invention concerne une amélioration des poussettes pliables en trois dimensions, offrant une possibilité de choix entre deux types de pliage, un pliage simple et rapide en deux dimensions (pliage 2D - les ensembles latéraux restant éloignés l'un de l'autre mais étant pliés), adapté par exemple à l'utilisation d'un hamac non pliable, et un pliage compact, en trois dimensions (pliage 3D - les ensembles latéraux étant pliés et rapprochés l'un de l'autre), nécessitant un hamac pliable adapté, ou le retrait préalable du hamac.

Selon les cas, le pliage 3D peut être obtenu à la suite du pliage 2D, ou directement, sans passer par un pliage 2D. Pour permettre ce choix entre un pliage 2D et un pliage 3D, la liaison cinématique entre les ensembles latéraux du châssis de la poussette et les croisillons liant ces ensembles est débrayable, de façon à associer les pliages des ensembles latéraux et des croisillons dans certains cas et à les dissocier dans d'autres cas.

En d'autres termes, l'invention prévoit des moyens d'accouplement sélectif (ou d'embrayage / débrayage) permettant de lier ou non le pliage des ensembles latéraux au rapprochement de ces derniers. Les moyens d'accouplement peuvent donc prendre deux états, un état actif dans lequel ces mouvements sont liés, et un état inactif dans lequel ils sont découplés; les moyensde contrôle du rapprochement restant alors inactifs, pour permettre un pliage à plat.

### 6.2 Mode de réalisation à liaison souple

### 6.2.1 Structure de la poussette

L'invention peut notamment s'appliquer à une poussette du type général décrit dans le document de brevet EP 0 577 496 cité en préambule, dans laquelle une liaison cinématique débrayable selon l'invention est mise en oeuvre sous la forme d'une liaison souple.

### 6.2.2 Ensembles latéraux

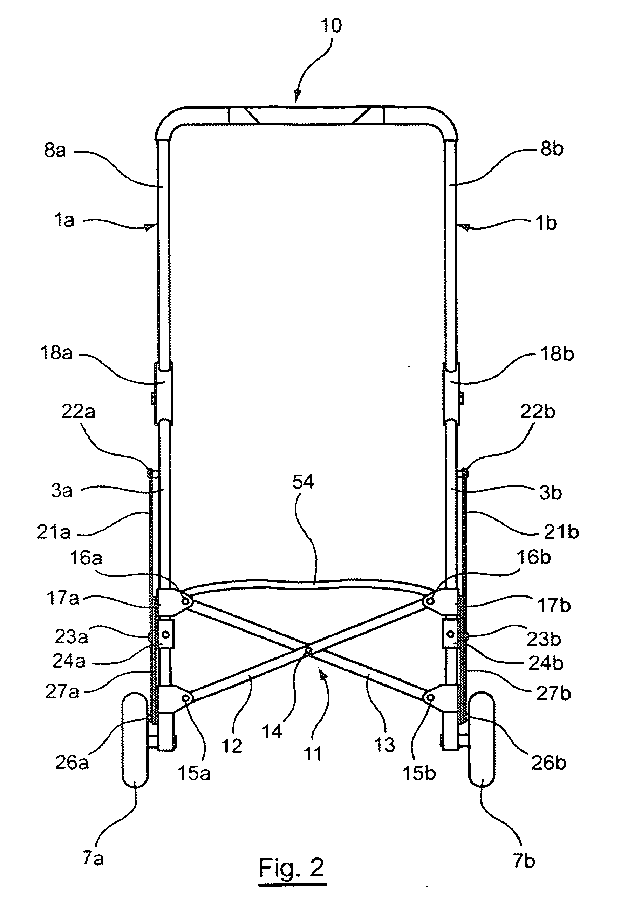

Telle qu'illustrée sur les figures 1 et 2, le châssis d'une telle poussette comprend deux ensembles latéraux référencés 1a et 1b visibles sur la figure 2. Ces deux ensembles latéraux sont identiques et on décrira les éléments qui constituent l'ensemble latéral 1a visible sur la figure 1 qui seront affectés de l'indice de référence a, étant entendu que l'ensemble latéral de châssis 1b présente les mêmes éléments qui seront affectés de l'indice de référence b.

En se reportant à la figure 1, il apparaît que l'ensemble latéral 1a comporte un brancard avant 2a et un brancard arrière 3a et un poussoir 8a. Le brancard avant 2a porte, à son extrémité inférieure, une roue avant 6a. Le brancard arrière 3a présente à son extrémité inférieure une roue arrière 7a. Les poussoirs 8a, 8b peuvent être équipés de poignées indépendantes, ou d'un guidon transversal pliable 10 qui, comme le montre la figure 2, joint les deux poussoirs 8a et 8b.

Le châssis représenté sur ces figures est conçu pour porter, par exemple, un hamac (non représenté) pour transporter un enfant.

Comme il apparaîtra plus clairement par la suite, dans les deux modes de pliage (2D ou 3D), chaque élément latéral est plié. En d'autres termes, le poussoir est ramené, de façon adéquate (articulation ou coulissement), sensiblement parallèlement au brancard avant (au-dessus ou au-dessous de celui-ci), et le brancard arrière est ramené sensiblement parallèlement au brancard avant, à l'aide de l'articulation prévue à cet effet. L'angle formé par le brancard arrière et le brancard avant passe d'une valeur supérieure à 45° à une valeur la plus faible possible, de préférence inférieure à 10°.

La différence entre les deux modes de pliage ne concernent donc pas le pliage de chaque élément latéral, mais le fait que ces deux éléments sont (pliage 3D) ou non (pliage 2D) rapprochés l'un de l'autre.

### 6.2.3 Croisillons liant les ensembles latéraux

### Croisillon arrière

Comme le montre la figure 2, un croisillon arrière 11 en forme de X articulé, joint les brancards arrières 3a et 3b de la poussette. Ce croisillon arrière 11 est constitué par une branche 12 et une branche 13 articulées en leur milieu par un axe 14 de façon à présenter la forme d'un X. Les extrémités inférieures des branches 12 et 13 peuvent pivoter autour d'axes 15a, 15b fixés aux brancards arrière 3a et 3b, au voisinage de l'extrémité inférieure de ces derniers. Les extrémités supérieures des branches 12 et 13 sont articulées sur des axes 16a, 16b solidaires de manchons 17a, 17b qui sont montés coulissants sur les brancards arrières respectifs 3a, 3b.

Le croisillon arrière en X peut être remplacé par tout autre type de croisillon, par exemple comprenant un ensemble de parallélogrammes déformables, permettant de lier les deux ensembles latéraux en les maintenant éloignés l'un de l'autre dans une position dépliée de la poussette, et en les rapprochant l'un de l'autre dans une position de pliage 3D de la poussette.

Pour assurer sa stabilité, la poussette peut également comporter un croisillon de fond (non représenté) situé entre les brancards avants et arrières de la poussette. Il peut par exemple être du type décrit dans le document EP 0 577 496. Le pliage de ce croisillon de fond est avantageusement associé au pliage du croisillon arrière.

### Liaison souple

L'invention est mise en oeuvre dans cette poussette par une liaison, ou biellette, souple, remplaçant les biellettes rigides classiquement utilisées pour obtenir un pliage 3D, pour ne pas imposer le déplacement des croisillons permettant le rapprochement des deux côtés de la poussette. Ainsi, ces liaisons souples sont débrayées, c'est-à-dire inactives, ou non tendues, lors d'un pliage 2D, et embrayées, c'est-à-dire actives, ou tendues, dans un pliage 3D.

En se reportant à nouveau à la figure 1, on voit que l'ensemble latéral la comporte une pièce formant coulisseau 18a solidaire par l'axe 19a de l'extrémité supérieure du brancard avant 2a. Le coulisseau 18a comporte également un axe d'articulation 20a autour duquel peut pivoter le brancard arrière 3a. Le coulisseau 18a présente en outre un passage à travers lequel peut coulisser le poussoir 8a parallèlement au brancard avant 2a. Dans la position complètement dépliée de la poussette illustrée sur la figure 1, l'extrémité inférieure du poussoir 8a fait saillie vers le bas par rapport au coulisseau 18a.

Une bielle latérale 21 a est articulée à son extrémité supérieure sur l'axe 22a solidaire de l'extrémité inférieure du poussoir 8a. Au voisinage de son extrémité inférieure, la bielle latérale 21a est articulée sur l'axe 23a solidaire de la partie inférieure du brancard arrière 3a. On notera que l'axe 23a est monté, dans l'exemple illustré, sur un manchon 24a fixe par rapport au brancard arrière 3a

La bielle latérale 21a se poursuit au-delà de son axe d'articulation 23a par une prolongation 25a munie à son extrémité inférieure d'un axe d'articulation 26a à laquelle une première extrémité d'une liaison souple 27a est reliée. La seconde extrémité (extrémité supérieure) de cette liaison souple est solidarisée par un axe 28a au manchon coulissant 17a qui est solidaire de l'extrémité supérieure de la branche 13 du croisillon arrière 11.

Cette liaison souple 27a peut par exemple être constituée d'une bande en matière plastique, d'une chaîne, d'un câble métallique, d'un ensemble de deux biellettes rigides articulées l'une par rapport à l'autre, ou plus généralement de toute liaison pouvant transmettre un mouvement de traction quand elle est tendue, mais ne pouvant pas transmettre un mouvement de compression. Sa longueur est choisie de façon que, lorsqu'elle est tendue, elle soit similaire à celle de la biellette rigide qu'elle remplace, dans la poussette du document EP 0 577 496.

La même disposition se retrouve sur l'élément de châssis latéral 1b, la liaison souple correspondante 27b- étant solidarisée au manchon coulissant 17b solidaire de l'extrémité supérieure de la branche 12 du croisillon arrière 11.

### 6.2.4 Cinématiques de pliage

L'invention permet de proposer deux modes de pliage, selon que les liaisons souples sont ou non actives (tendues) :
- un pliage 2D, comme illustré par la figure 3B, qui montre la poussette en cours de pliage : les liaisons souples 27a et 27b sont inactives, détendues, et les manchons coulissants 17a et 17b, et par conséquence le croisillon arrière 11, sont immobiles ;
- un pliage 3D, comme illustré par la figure 3A, qui montre la poussette en cours de pliage : les liaisons souples 27a et 27b sont tendues, et donc actives, entraînant les manchons coulissants 17a et 17b, et par conséquence le croisillon arrière 11, de façon à rapprocher les deux ensembles latéraux 1a et 1b de la poussette.

La figure 4 présente, de façon schématique, le châssis de la poussette décrite précédemment, vu de côté. Lorsque la poussette est dans la position dépliée, la liaison souple 27a est tendue.

### 6.2.5 Pliage 2D

Lorsque l'utilisateur désire mettre en oeuvre un pliage 2D, comme illustré schématiquement par les figures 5 et 6, respectivement vue de côté et vue de derrière, il pousse simplement sur les poussoirs 8a et 8b, après avoir actionné les moyens de déverrouillage prévus à cet effet (non représentés). Les poussoirs 8a et 8b sont donc ramenés parallèlement le long des brancards avant 2a et 2b, par Coulissement.

Le déplacement des poussoirs 8a et 8b vers le bas entraîne les bielles latérales 21a et 21b correspondantes, qui agissent sur les brancards arrière respectivement 3a et 3b, de façon à plier chacun des ensembles latéraux, en les ramenant sur ou à proximité des brancards avant correspondants 2a et 2b. Le croisillon 11 (figure 6) ne bouge pas, et l'écartement entre les deux brancards arrière (et donc entre les deux ensembles latéraux) reste inchangé, par rapport à la position dépliée (figure 4). Les liaisons souples 27a et 27b permettent, en se détendant, d'absorber la variation de longueur entre les points A et B correspondant respectivement au manchon coulissant 17 et à l'extrémité de la bielle latérale 21.

Ces liaisons souples 27a et 27b sont donc détendues, dans cette position, comme illustré par les figures 5 et 6. On obtient donc ainsi un pliage 2D. Ce mode de pliage est bien adapté notamment au cas où le châssis est plié avec un hamac non pliable, ou dans le cas où une compacité maximum n'est pas requise.

### 6.2.6 Pliage 3D

En revanche, lorsque l'on cherche à obtenir une telle compacité maximum, par exemple pour un rangement dans un placard ou dans un coffre de voiture, il est aisé de compléter le pliage, par une opération supplémentaire, pour obtenir un pliage 3D, comme illustré par les figures 7 et 8.

Pour cela, l'utilisateur saisit la poignée 54 qui relie les deux manchons coulissants 17a et 17b (figures 6 et 8). En agissant sur cette poignée, qui peut par exemple être une sangle en matière plastique, on guide les manchons coulissants 17a et 17b le long des brancards arrière respectifs 3a et 3b, ce qui entraîne le pliage du croisillon 11, et donc le rapprochement des deux éléments latéraux de la poussette. Dans cette position, la liaison souple 27a, 27b est à nouveau tendue.

Il est possible également d'obtenir un pliage 3D après avoir actionné les moyens de déverrouillage, à partir de la position dépliée de la figure 4. Pour cela, une traction sur la poignée 54 entraîne un pliage du croisillon 11, rapprochant les ensembles latéraux, et exerce une traction sur les liaisons souples 27a et 27b, qui sont alors tendues. La bielle latérale 21, entraînée par la liaison souple 27a, assure simultanément le pliage des brancards arrière 3 par rapport aux brancards avant 2 de chaque ensemble latéral.

### 6.2.7 Dépliage

Le dépliage s'obtient en tirant sur les poussoirs 8a et 8b, après avoir, le cas échéant, actionné le ou les moyens de déverrouillage prévus à cet effet. Si la poussette est pliée en 2D, les liaisons souples 27a et 27b sont détendues. Lors du dépliage des ensembles latéraux, elles se tendent progressivement, jusqu'à être tendues dans la position dépliée de la poussette, représentée par les figures 1 et 2.

Si la poussette est pliée en 3D, le coulissement vers le haut des poussoirs 8 entraîne le déplacement des bielles latérales 21, qui assurent l'éloignement des brancards arrière par rapport aux brancards avant. Par ailleurs, cette bielle latérale 21 maintient les liaisons souples 27a, 27b tendues, de sorte qu'elles entraînent alors les coulisseaux 17, de façon que le croisillon arrière 11 prenne sa position ouverte, et éloigne les deux ensembles latéraux de la poussette l'un de l'autre.

Des moyens d'aide au dépliage, tels qu'une pédale montée sur le croisillon, peuvent être prévus.

Ainsi, selon l'invention, on propose de façon simple une poussette pouvant adopter deux modes de pliage, un pliage 2D et un pliage 3D, grâce à la mise en oeuvre de liaisons souples, remplaçant des biellettes rigides classiques, de façon à dissocier les deux types de pliage.

### 6.3 Mode de réalisation à pièce coulissante

### 6.3.1 Structure

Les figures 9 à 14 présentent un autre mode de réalisation de l'invention, mis en oeuvre sur un autre modèle de poussette.

Le châssis de poussette représenté sur la figure 9 comporte deux ensembles latéraux comprenant chacun un brancard avant 92, un brancard arrière 93 et un poussoir 91. Le brancard avant 92 et le brancard arrière 93 sont liés par une liaison pivotante à leur extrémité supérieure de façon à former un compas. Le poussoir 91 est monté coulissant sur le brancard avant 92. Une bielle latérale 921 est liée par des liaisons pivotantes aux extrémités inférieures du poussoir 91 et du brancard arrière 93, de façon à lier cinématiquement le pliage du compas formé par le brancard avant 92 et le brancard arrière 93 avec le coulissement du poussoir 91 sur le brancard avant 92.

Ainsi, dans leur position pliée représentée par exemple sur les figures 11 et 13, le brancard arrière 93, le brancard avant 92 et le poussoir 91 sont ramenés les uns contre les autres.

Les deux ensembles latéraux sont liés l'un à l'autre d'une part par un compas 911 et d'autre part par un croisillon de fond 912.

Le compas 911 est constitué d'un ensemble de biellettes et comporte en son milieu une poignée 954. Une traction sur la poignée 954 permet de le replier de façon à rapprocher l'un de l'autre les ensembles latéraux droit et gauche. Le pliage de ce croisillon arrière n'est cependant pas directement lié cinématiquement au pliage des ensembles latéraux droit et gauche.

Le croisillon de fond 912 est constitué de deux traverses 9121 formant un X articulé, liés d'une part au brancard arrière 93 de chacun des ensembles latéraux par une liaison rotule 9122 et d'autre part à la bielle latérale 921 de chacun des ensembles latéraux, a proximité des poussoirs 91, par une liaison rotule glissante. Plus précisément, comme le représente la figure 10, l'extrémité avant de chacune des traverses 9121 est liée par une liaison rotule 9123 à une pièce de liaison 94 pouvant coulisser le long de la bielle latérale 921 correspondante. Le coulissement de la pièce de liaison 94 le long de cette bielle latérale 921 est guidé le long d'une rainure 9211 définie dans la bielle latérale 921, dans laquelle coulisse un doigt (non visible sur les figures) de la pièce de liaison 94.

Dans la position ouverte de la poussette, que représentent les figures 9 et 10. la pièce de liaison 94 est en butée contre l'extrémité avant de la rainure 9211, à l'avant de la bielle latérale 921.

### 6.3.2 Pliage 2D et dépliage

Pour mettre en oeuvre le pliage 2D de la poussette, l'utilisateur déverrouille la position des poussoirs 91 par rapport aux brancards avant 92 correspondant, et les pousse afin de les faire coulisser le long des brancards avant 92. vers leur extrémité inférieure. Les poussoirs 91, en coulissant, exercent une traction sur les bielles latérales 921 correspondantes, qui entraînent le pliage des compas formés par les brancards avant 92 et arrière 93. Ce coulissement des poussoirs 91 sur les brancards avant 92 se poursuit jusqu'à ce que le brancard arrière 93, le brancard avant 92 et le poussoir 91 de chaque ensemble latéral soient ramenés les uns contre les autres.

Comme le montre la figure 12, lors du pliage des ensembles latéraux, les pièces de liaison 94 auxquelles sont liées les extrémités avant des traverses 9121 du croisillon de fond 912 coulissent le long des bielles latérales 921 correspondantes, dans les rainures 9211, de telle façon que l'angle formé par les traverses 9121 du croisillon de fond 912 ne soit pas modifié. Le pliage des ensembles latéraux n'entraîne ainsi pas le pliage du croisillon de fond 912. La distance entre les deux ensembles latéraux ne varie ainsi pas, ce qui permet d'obtenir un pliage 2D représenté par la figure 11.

Depuis cette position pliée 2D, une traction de l'utilisateur sur les bras poussoir 91 a pour effet de déplier chacun des ensembles latéraux, ce qui permet le dépliage de la poussette.

### 6.3.3 Pliage 3D et dépliage

L'utilisateur peut également agir sur le compas 911 de la poussette pliée en 2D, en tirant vers le haut sur la poignée 954 équipant ce compas 911. Cette traction agit sur les bielles composant ce compas 911 de façon à le plier, en rapprochant l'un de l'autre les ensembles latéraux. Le rapprochement des ensembles latéraux entraîne le pliage du croisillon de fond 912, les pièces de liaison 94 auxquelles sont liées les extrémités avant des traverses 9121 du croisillon de fond 912 coulissant vers l'avant, le long des bielles latérales 921 correspondantes, dans les rainures 9211.

On obtient ainsi un pliage 3D de la poussette, représenté par la figure 13, dans lequel les pièces de liaison 94 auxquelles sont liées les extrémités avant des traverses 9121 du croisillon de fond 912 ont, comme le montre la figure 14, la même position par rapport aux bielles latérales 921 correspondantes que dans la position dépliée de la poussette représentée par les figures 9 et 10.

Depuis la position dépliée de la poussette représentée par la figure 9, il est également possible de plier directement la poussette en 3D, en agissant directement sur la poignée 954 de façon à plier le compas 911 après avoir actionné les moyens de déverrouillage. Le pliage de ce compas 911 rapproche l'un de l'autre les ensembles latéraux, ce qui entraîne un pliage du croisillon de fond 912. Comme le montre la figure 10, la pièce de liaison 94, dans la position dépliée de la poussette, est en butée contre l'extrémité avant de la rainure 9211, à l'avant de la bielle latérale 921. Elle ne peut donc pas coulisser vers l'avant le long de la bielle latérale 921 pendant le pliage du compas 911. Ce pliage entraîne donc le coulissement du poussoir 91 le long du brancard avant 92, jusqu'à la position de pliage 3D de la poussette, représentée par les figures 13 et 14.

Depuis la position pliée 3D, une action de dépliage sur les ensembles latéraux, par une traction de l'utilisateur sur les poussoirs 91, entraîne une action sur les pièces de liaison 94 qui sont en butée à l'avant de la rainure 9211. Cette action a pour effet de déplier le croisillon de fond 912, ce qui éloigne les ensembles latéraux l'un de l'autre et déplie la poussette.

### 6.4 Mode de réalisation à pièce coulissante appliqué à un pliage de type fagot

Le principe général de l'invention, qui consiste à mettre en oeuvre une liaison cinématique telle que le rapprochement des ensembles latéraux l'un de l'autre entraîne le pliage de ces ensembles latéraux, mais que le pliage des ensembles latéraux n'entraîne pas nécessairement le rapprochement des ensembles latéraux l'un de l'autre, peut être mis en oeuvre sur la majorité des poussettes ayant une cinématique permettant un pliage 3D.

En particulier, une variante du second mode de réalisation présenté, dans lequel les extrémités d'un croisillon en X peuvent coulisser le long d'une bielle latérale, peut facilement être mis en oeuvre sur des cinématiques de type « poussette fagot », bien connues de l'homme du métier.

### 6.5 Mécanisme de verrouillage de la position pliée

Les figures 15 à 29 illustrent un exemple de mécanisme de verrouillage d'un châssis de poussette dans sa position pliée, pouvant avantageusement être mis en oeuvre sur une poussette selon l'invention. Ce mécanisme de verrouillage permet en effet de verrouiller la position de la poussette quand elle est pliée, que ce soit en pliage 2D ou en pliage 3D.

### 6.5.1 Pièce de verrouillage

La figure 15 est une vue éclatée des éléments constitutifs de ce mécanisme de verrouillage. On peut y voir l'extrémité supérieure d'un brancard arrière 81, un élément de charnière de brancard arrière, encore appelé élément inférieur 82, destiné à être solidarisé à l'extrémité supérieure du brancard arrière 81, un élément de charnière de brancard avant, encore appelé élément supérieur 83, destiné à être solidarisé au brancard avant et à permettre le coulissement du poussoir. L'élément inférieur 82 est conçu pour pivoter dans l'élément supérieur 83, autour d'un axe passant par les ouvertures 821 de l'élément inférieur et 831 de l'élément supérieur.

L'élément inférieur 82 porte le mécanisme de verrouillage, qui est notamment constitué d'un bouton-verrou 84, d'une navette mémoire 841, d'une buttée verrou 85, d'une navette de déverrouillage 851 et d'une lame ressort 852. Le brancard arrière 81 présente une rainure 811 s'étendant sur toute sa longueur, et dans laquelle peut coulisser une chape mobile 86. Cette chape mobile 86 est destinée à être liée à l'extrémité d'une biellette d'un croisillon arrière de la poussette (non représenté). Suivant la position de ce croisillon arrière, la chape mobile 86 a une position différente dans la rainure 811.

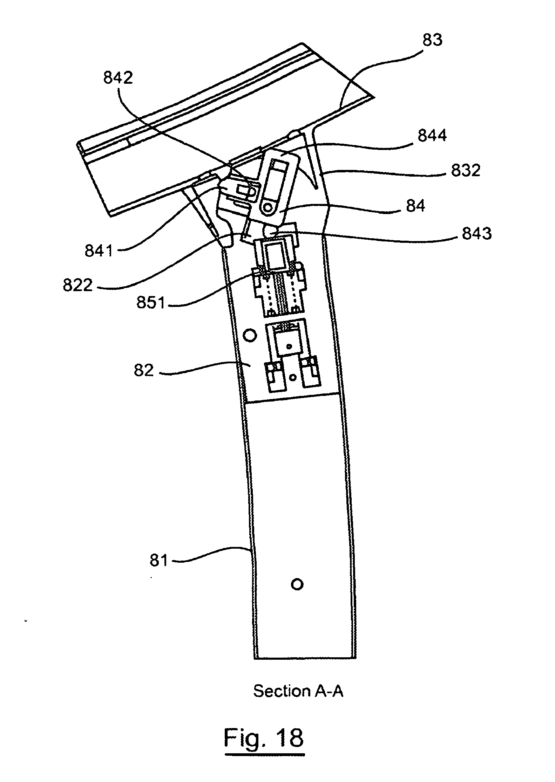

Les figures 16 à 18 sont des vues du mécanisme de verrouillage dans la position dépliée de la poussette, respectivement en vue de côté, en vue de face et en section. Dans cette position dépliée, le mécanisme n'a pas de fonction de verrouillage. On peut voir sur la figure 18 que le bouton verrou 84 peut coulisser dans une ouverture 822 définie dans l'élément inférieur 82. Un ressort tend à le maintenir dans sa position partiellement sortie représentée par la figure 18. La navette mémoire 841 peut coulisser dans une ouverture 842 définie dans le bouton verrou 84, perpendiculairement à la direction de coulissement du bouton verrou 84. Un ressort tend à la maintenir dans sa position partiellement sortie représentée par la figure 18.

Dans la position dépliée de la poussette, l'utilisateur n'a pas accès à la portion supérieure 844 du bouton verrou 84, celui-ci étant dissimulé derrière une paroi 832 de l'élément supérieur 83.

L'extrémité inférieure 843 du bouton verrou 84 peut appuyer sur l'extrémité supérieure de la navette de déverrouillage 851, qui peut coulisser dans une ouverture définie dans l'élément inférieur 82, dans la direction définie par le brancard arrière 81. Un ressort tend à maintenir la navette de déverrouillage 851 dans sa position haute représentée par la figure 18.

On peut voir sur les figures 16 et 17 que, dans cette position dépliée de la poussette, la chape mobile 86 est dans une position basse dans la rainure 811, relativement éloignée de l'extrémité supérieure du brancard arrière 81. Cette position de la chape mobile 86 correspond à une position dépliée du croisillon arrière, dans laquelle il maintient éloignés l'un de l'autre les éléments latéraux de la poussette.

### 6.5.2 Principe du verrouillage de la position pliée en 2D

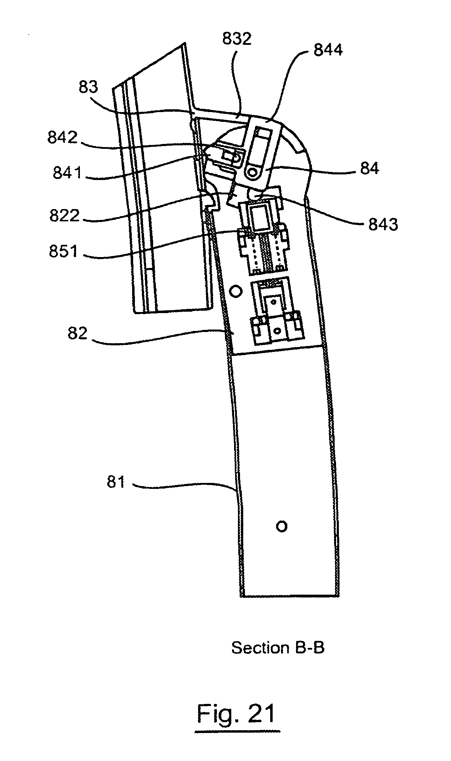

Les figures 19 à 21 sont des vues du mécanisme de verrouillage dans la position de pliage 2D de la poussette, respectivement en vue de coté, en vue de face et en section. Comme le montre la figure 21, le bouton-verrou 84 est, dans cette position de la poussette, dans sa position partiellement sortie de l'ouverture 822 définie dans l'élément inférieur 82. Du fait de la rotation de l'élément inférieur 82 par rapport à l'élément supérieur 83, la portion supérieure 844 n'est plus dissimulée derrière la paroi 832, mais vient au contraire en butée contre le bord de cette paroi. Dans cette position, le bouton-verrou 84 verrouille donc la position angulaire de l'élément inférieur 82 par rapport à l'élément supérieur 83, et donc du brancard arrière par rapport au brancard avant de la poussette.

Comme le montre les figures 19 et 20, dans cette position de pliage 2D de la poussette, la chape mobile 86 est dans la même position dans la rainure 811 que quand la poussette est dépliée. Les croisillons arrières de la poussette sont en effet dans la même position.

### 6.5.3 Principe du verrouillage de la position pliée en 3D

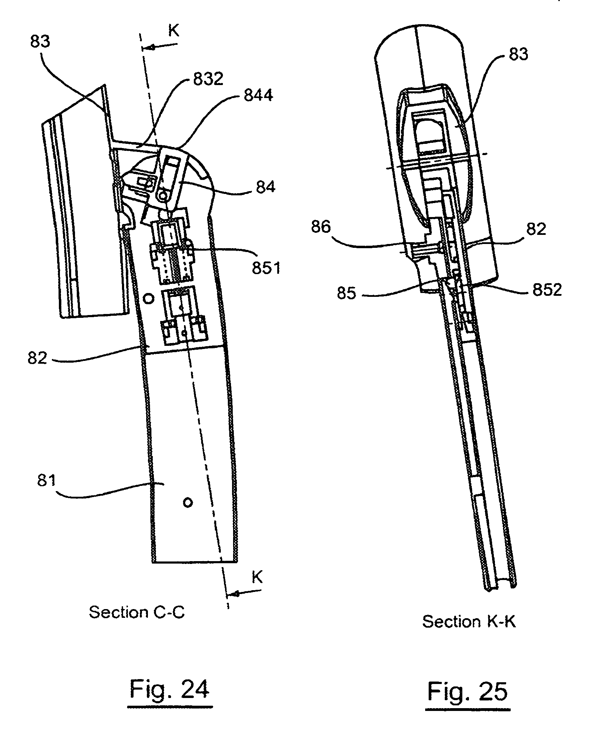

Les figures 22 à 25 sont des vues du mécanisme de verrouillage dans la position de pliage 3D de la poussette, respectivement en vue de côté, en vue de face et deux vues de section. Comme le montre la figure 24, le bouton-verrou 84 est, dans cette position de la poussette, dans la même position que dans la position pliée en 2D. Il verrouille donc également la position angulaire du brancard arrière par rapport au brancard avant de la poussette.

Comme le montre la figure 22, dans cette position de pliage 3D de la poussette, la chape mobile 86 est dans une position haute dans la rainure 811, proche de l'extrémité supérieure du brancard arrière 81. Cette position de la chape mobile correspond à la position pliée des croisillons arrières de la poussette, dans laquelle les ensembles latéraux sont rapprochés l'un de l'autre.

Comme le montrent les figures 22 et 25, la butée verrou 85, repoussée par la lame ressort 852, maintient la chape mobile 86 dans cette position, en bloquant son coulissement dans la rainure 811. La position pliée de la poussette en 3D est donc verrouillée par le mécanisme de verrouillage.

### 6.5.4 Déverrouillage de la position pliée

L'utilisateur peut déverrouiller l'une quelconque des positions pliées en agissant sur le bouton formé par la portion supérieure 844 du bouton-verrou 84, qui apparaît à côté de la paroi 832 de l'élément supérieur 83. En appuyant sur le bouton-verrou 84, l'utilisateur le repousse dans sa position représentée par les figures 26 et 27.

Dans cette position, la portion supérieure 844 du bouton-verrou 84 n'est plus en butée contre le bord de la paroi 832 de l'élément supérieur 83. Il ne verrouille donc plus la position angulaire de l'élément inférieur 82 par rapport à l'elément supérieur 83.

De plus, dans cette position, l'extrémité inférieure 843 du bouton verrou 84 appuie sur l'extrémité supérieure de la navette de déverrouillage 851, qui coulisse alors vers le bas dans son ouverture. L'extrémité inférieure de la navette de déverrouillage 851 agit alors sur la butée verrou 85 et l'escamote dans l'élément inférieur 82, ce qui libère le passage dans la rainure 811. Si la chape mobile 86 était dans sa position haute correspondant au pliage 3D, sa position est alors déverrouillée.

L'action de l'utilisateur sur la portion supérieure 844 du bouton-verrou 84 permet donc de déverrouiller la position de pliage de la poussette, que celle-ci soit pliée en 2D ou en 3D.

Il est à noter, comme le représente la figure 26, que, quand le bouton-verrou 84 est enfoncé, la navette mémoire 841 bloque la position du bouton-verrou 84, qui reste ainsi en position enfoncé. Le dépliage de la poussette est ainsi facilité pour l'utilisateur. Pendant le mouvement de dépliage de la poussette, une butée 834 de l'élément supérieur 83 agit sur la navette mémoire 841, comme le représentent les figures 28 et 29, afin de lui faire débloquer la position du bouton-verrou 84.

### 6.6 Exemple de hamac utilisable sur une poussette selon l'invention

A titre indicatif, on décrit ci-après un exemple de hamac pouvant être utilisé notamment avec les châssis décrits ci-dessus, et plus généralement avec la plupart des poussettes et mettant en oeuvre un pliage 2D. En conséquence, dans le cadre de l'invention, la poussette équipée d'un tel hamac, illustrée par les figures 30 à 34, peut être pliée uniquement en 2D. Il est nécessaire de séparer ce hamac du châssis pour pouvoir bénéficier du pliage 3D.

La figure 30 illustre cet exemple de hamac, vu de côté, dans une position assise. La figure 31 présente le même hamac dans une position allongée, et la figure 32 dans sa position de stockage correspondant à la position pliée 2D du châssis.

Ce hamac présente l'avantage d'être compact, en position pliée, confortable, et facile à régler dans plusieurs positions.

Les figures 33 et 34 illustrent schématiquement la cinématique de ce hamac, mettant en oeuvre un parallélogramme déformable, respectivement dans la position assise (figures 30 et 33) et allongée (figures 31 et 34).

Comme on le voit sur la figure 30, le hamac comprend un dossier 71 et une assise 72, ainsi qu'un marchepied 73, s'étendant dans le prolongement de l'assise 72.

Dans ce mode de réalisation, le dossier 71 et l'assise 72 sont réalisés par exemple en matière plastique et peuvent être recouverts de tout revêtement adéquat.

Deux accoudoirs 74 s'étendent à partir du dossier 71. Ils sont reliés, à leur autre extrémité, à l'assise, par l'intermédiaire d'une biellette 75.

Ces accoudoirs 74 forment, ou portent, le support du hamac. Ils comprennent des moyens de solidarisation 741 aptes à coopérer avec des moyens de réception complémentaires prévus à cet effet sur le châssis. Il s'agit par exemple d'une fixation de type Moduloclip (marque déposée), selon la technique développée et diffusée par le demandeur.

Ainsi, le support est constitué des deux accoudoirs 74, sur lesquels sont articulés, en partie avant, la biellette 75, par l'intermédiaire de l'articulation 77, et en partie arrière le dossier 71, par l'intermédiaire de l'articulation 76.

L'assise 72 est suspendue à l'avant par une articulation 78 avec l'extrémité inférieure de la biellette 75, et à l'arrière par une articulation 79 avec le bas du dossier 71.

Cet assemblage est bien sûr répété sur chacun des deux flancs du hamac.

Le marchepied 73 est articulé sur l'avant de l'assise, par exemple par l'articulation 78. Son orientation peut ainsi être synchronisée avec le mouvement de la biellette 75. Si nécessaire, un système de crabot débrayable, par exemple, peut être prévu, pour désactiver cette synchronisation en fonction des besoins de l'utilisateur.

Les articulations 76 comprennent des moyens de verrouillage dans différentes positions d'inclinaison, dont au moins deux positions, la position assise de la figure 30 et la position allongée de la figure 31. Des positions intermédiaires sont bien sûr envisageables. Il n'est pas nécessaire de prévoir, pour la position repliée de stockage de la figure 32, un verrouillage.

La commande de déverrouillage peut être centralisée sur le haut du dossier, et matérialisée par la poignée 710. La connexion entre la poignée 710 et les noix de verrouillage (non apparentes) formées au niveau des articulations 76 peut par exemple être assurée par des câbles.

Comme cela apparaît plus clairement sur les illustrations schématiques des figures 33 et 34, les quatre articulations 76, 77, 78 et 79 constituent un parallélogramme déformable. Cette cinématique présente de nombreux avantages, notamment :
- pliage en deux dimensions à plat, comme cela apparaît sur la figure 32, le dossier 71 étant rabattu sur l'assise 72 ;
- possibilité d'obtenir une position allongée efficace, avec un angle formé entre l'assise et le dossier pouvant être supérieur à 170°, tout en conservant une synchronisation du marchepied 73 ;
- assiette de l'assise 72 conservée dans toutes les positions.

Par ailleurs, le fait que le verrouillage de l'inclinaison soit assuré dans la noix de verrouillage au niveau de l'articulation 76 entre l'accoudoir 74 et le dossier 71 permet de faciliter les manipulations. En effet, l'articulation est beaucoup moins sollicitée que si la noix de verrouillage était placée, comme c'est le cas sur la plupart des hamacs à dossier inclinable, en bas du dossier 71.

De plus, la position de l'axe de cette articulation 76 se situe au voisinage du centre de gravité G de l'enfant (figure 33), ce qui permet d'équilibrer la charge dans le hamac, et donc de rendre les manoeuvres de mise en position beaucoup plus aisées. Par rapport aux systèmes connus, cette approche facilite la remontée du dossier 71 de la position allongée vers la position assise, même en présence d'un enfant, et sécurise la mise en position, dans le cas du déplacement dans la position allongée, en évitant le risque de retombée brutale du dossier sous l'effet du poids de l'enfant.

## Revendications

1. Châssis pliable de poussette pour enfant, comportant deux ensembles latéraux (1a, 1b) pliables, chacun comprenant un brancard avant (2a, 2b) et un brancard arrière (3a,3b), et des moyens de contrôle de l'écartement (11; 911) entre lesdits ensembles latéraux (1a, 1b), permettant de les rapprocher l'un de l'autre dans une position de pliage compact et de les éloigner l'un de l'autre dans une position dépliée,
**caractérisé en ce qu'**il comprend des moyens d'accouplement sélectif (27a, 27b ;94, 9211) desdits moyens de contrôle de l'écartement (11; 911) avec lesdits ensembles latéraux (1a, 1b), pouvant prendre un état actif et un état inactif, de façon à permettre deux types de pliage dudit châssis :
- *dans ledit état actif*. un pliage compact, dans lequel lesdits ensembles latéraux (1a, 1b) sont simultanément :
- pliés, chaque brancard arrière (3a, 3b) étant ramené sensiblement parallèlement au brancard avant (2a, 2b) correspondant, et
- rapprochés l'un de l'autre par lesdits moyens de contrôle de l'écartement, dans ledit état actif ; et
- *dans ledit état inactif.* un pliage à plat, dans lequel chaque ensemble latéral (1a, 1b) est plié, le brancard arrière (3a, 3b) étant ramené sensiblement parallèlement au brancard avant (2a, 2b), les deux ensembles latéraux (1a, 1b) étant maintenus éloignés l'un de l'autre,
lesdits moyens de contrôle de l'écartement (11; 911) étant désaccouplés desdits ensembles latéraux (1a, 1b), dans ledit état inactif, *et accouplés auxdits ensembles latéraux (1a, 1b), dans ledit état actif.*

2. Châssis de poussette selon la revendication 1, **caractérisé en ce que** lesdits moyens d'accouplement sélectif (27a, 27b ; 94, 9211) sont dans ledit état actif lorsque le pliage est effectué en agissant sur lesdits moyens de contrôle de l'écartement (11; 911), et dans ledit état inactif lorsque le pliage est effectué en agissant sur lesdits ensembles latéraux (1a, 1b).

3. Châssis de poussette selon la revendication 2, **caractérisé en ce que** lesdits moyens d'accouplement sélectif sont constitués par une liaison souple (27a, 27b), dans l'état actif quand elle est sollicitée en traction et dans l'état inactif quand elle est sollicitée en compression.

4. Châssis de poussette selon la revendication 3, **caractérisé en ce que** ladite liaison souple (27a, 27b) appartient au groupe comprenant :
- les sangles ;
- les chaînes :
- les câbles ;
- les ensembles de biellettes articulées.

5. Châssis de poussette selon l'une quelconque des revendications 1 à 4, **caractérisé en ce que** lesdits moyens de contrôle de l'écartement comprennent un ensemble d'au moins deux tiges formant au moins un croisillon (11) reliant lesdits ensembles latéraux (1a, 1b).

6. Châssis de poussette selon la revendication 5, **caractérisé en ce que** ledit au moins un croisillon (11) relie les brancards arrière (3a, 3b) desdits ensembles latéraux (1a, 1b).

7. Châssis de poussette selon la revendication 3 et l'une quelconque des revendications 4 et 6, **caractérisé en ce que** les extrémités supérieures desdits moyens de contrôle de l'écartement portent une pièce de guidage coulissant sur ledit brancard arrière (3) correspondant, reliée par ladite liaison souple (27) à une bielle reliant un brancard avant (2) et le brancard arrière (3) de l'ensemble latéral (1) correspondant.

8. Châssis de poussette selon l'une quelconque des revendications 1 et 2, **caractérisé en ce que** lesdits moyens d'accouplement sélectif comprennent au moins une liaison coulissante d'une pièce de liaison (94) dans une rainure (9211), lesdits moyens d'accouplement sélectif étant dans ledit état actif lorsque ladite pièce de liaison (94) est en butée contre une extrémité de ladite rainure (9211), et dans ledit état inactif quand ladite pièce de liaison (94) peut coulisser dans ladite rainure (9211).

9. Châssis de poussette selon la revendication 8, **caractérisé en ce que** ladite rainure (9211) est formée dans un élément d'un desdits ensembles latéraux (1a, 1b) et **en ce que** ladite pièce de liaison est montée à l'extrémité d'une tige d'un croisillon formant lesdits moyens de contrôle de l'écartement.

10. Châssis de poussette selon l'une quelconque des revendications 1 à 9, **caractérisé en ce qu'**il comporte un mécanisme de verrouillage de la position pliée dudit châssis, présentant :
- des premiers moyens de verrouillage en position pliée d'un desdits éléments latéraux (1a, 1b) ;
- des seconds moyens de verrouillage en position pliée desdits moyens de contrôle de l'écartement ;
- des moyens de déverrouillage assurant le déverrouillage simultané desdits premiers et seconds moyens de verrouillage.

11. Poussette **caractérisée en ce qu'**elle comprend un châssis selon l'une quelconque des revendications précédentes et des moyens de support et de maintien d'au moins un élément amovible de transport d'un enfant.

12. Poussette selon la revendication 11, **caractérisée en ce que** ledit élément amovible de transport d'un enfant appartient au groupe comprenant :
- les hamacs pliables ;
- les hamacs non pliables ;
- les nacelles.

## Claims

1. Foldable chassis for a child stroller, comprising two foldable lateral assemblies (1a, 1b), each comprising a front branch (2a, 2b) and a rear branch (2a, 2b), and means for controlling the spacing (11; 911) between said lateral assemblies (1a, 1b), enabling them to be brought together in a compact folding position and spaced apart from one another in an unfolded position,
**characterized in that** it comprises means for selective coupling (27a, 27b; 94, 9211) of said spacing control means (11; 911) with said lateral assemblies (1a, 1b), capable of adopting an active state and an inactive state, so as to enable two types of folding of said chassis:
- in said active state, a compact folding, in which said lateral assemblies (1a, 1b) are simultaneously:
- folded, each rear branch (3a, 3b) being brought substantially parallel to the corresponding front branch (2a, 2b), and
- brought together by said spacing control means, in said active state; and
- in said inactive state, a flat folding, in which each lateral assembly (1a, 1b) is folded, said rear branch (3a, 3b) being brought substantially parallel to the front branch (2a, 2b), the two lateral assemblies being kept apart from one another,
said spacing control means (11; 911) being detached from said lateral assemblies (1a, 1b), in said inactive state and coupled to said lateral assemblies (1a, 1b) in said active state.

2. A stroller chassis according to claim 1, **characterized in that** said selective coupling means (27a, 27b; 94, 9211) are in said active state when the folding is performed by acting on said spacing control means (11; 911), and in said inactive state when the folding is performed by acting on said lateral assemblies (1a, 1b).

3. Stroller chassis according to claim 2, **characterized in that** said selective coupling means consist of a flexible connection (27a, 27b), in the active state when it is pulled and in the inactive state when it is compressed.

4. Stroller chassis according to claim 3, **characterized in that** said flexible connection (27a, 27b) belongs to the group including:
- straps;
- chains;
- cables;
- pivoting connecting rod assemblies.

5. Stroller chassis according to any one of claims 1 to 4, **characterized in that** said spacing control means include an assembly of at least two rods forming at least one cross-brace (11) connecting said lateral assemblies (1a, 1b).

6. Stroller chassis according to claim 5, **characterized in that** said at least one cross-brace (11) connects the rear branches (3a, 3b) of said lateral assemblies (1a, 1b).

7. Stroller chassis according to any one of claims 4 and 6, **characterized in that** the upper ends of said spacing control means have a guide part sliding over said corresponding rear branch (3), connected by said flexible connection (27) to a connecting rod connecting a front branch (2) and the rear branch (3) of the corresponding lateral assembly (1).

8. Stroller chassis according to either one of claims 1 or 2, **characterized in that** said selective coupling means include at least one sliding connection of a connection part (94) in a groove (9211), in which said selective coupling means are in said active state when said connection part (94) abuts against an end of said groove (9211), and in said inactive state when said connection part (94) can slide in said groove (9211).

9. Stroller chassis according to claim 8, **characterized in that** said groove (9211) is formed in an element of one of said lateral assemblies (1a, 1b), and **in that** said connection part is mounted at the end of a rod of a cross-brace forming said spacing control means.

10. Stroller chassis according to any one of claims 1 to 9, **characterized in that** it comprises a mechanism for locking the folded position of the chassis, having:
- first means for locking one of said lateral elements (1a, 1b) in the folded position;
- second means for locking said spacing control means in the folded position;
- unlocking means ensuring the simultaneous unlocking of said first and second locking means.

11. Stroller **characterized in that** it includes a chassis according to any one of the previous claims and means for supporting and holding at least one removable child transport element.

12. Stroller according to claim 11, **characterized in that** said removable child transport element belongs to the group including:
- foldable carriers;
- non-foldable carriers;
- baby seats.

## Patentansprüche

1. Zusammenklappbarer Kinderwagenrahmen, umfassend zwei zusammenklappbare seitliche Anordnungen (1a, 1b), die jeweils eine vordere Verstrebung (2a, 2b) und eine hintere Verstrebung (3a, 3b) umfassen, und Mittel (11; 911) zum Regeln des Abstands zwischen den seitlichen Anordnungen (1a, 1b), die es ermöglichen, diese in einer platzsparenden zusammengeklappten Position zusammenzuführen und sie in einer aufgeklappten Position voneinander zu entfernen,
**dadurch gekennzeichnet, dass** er Mittel (27a, 27b; 94, 9211) zum selektiven Koppeln der Abstandsregelmittel (11; 911) mit den seitlichen Anordnungen (1a, 1b) umfasst, die einen aktiven Zustand und einen inaktiven Zustand annehmen können, um zwei Arten des Zusammenklappens des Rahmens zu ermöglichen:
- im aktiven Zustand ein platzsparendes Zusammenklappen, bei dem die seitlichen Anordnungen (1a, 1b) gleichzeitig:
- zusammengeklappt werden, wobei jede hintere Verstrebung (3a, 3b) im Wesentlichen parallel zu der entsprechenden vorderen Verstrebung (2a, 2b) zurückgeführt wird, und
- durch die Abstandsregelmittel in den aktiven Zustand zusammengeführt werden; und
- in dem inaktiven Zustand ein Flachlegen, wobei jede seitliche Anordnung (1a, 1b) zusammengeklappt wird, wobei die hintere Verstrebung (3a, 3b) im Wesentlichen parallel zu der vorderen Verstrebung (2a, 2b) zurückgeführt wird, wobei die beiden seitlichen Anordnungen (1a, 1b) voneinander entfernt gehalten werden,
wobei die Abstandsregelmittel (11; 911) von den seitlichen Anordnungen (1a, 1b) in dem inaktiven Zustand entkoppelt werden, und mit den seitlichen Anordnungen (1a, 1b) in dem aktiven Zustand gekoppelt werden.

2. Kinderwagenrahmen nach Anspruch 1, **dadurch gekennzeichnet, dass** die selektiven Koppelmittel (27a, 27b; 94, 9211) sich in dem aktiven Zustand befinden, wenn das Zusammenklappen ausgeführt wird, indem man auf die Abstandsregelmittel (11; 911) einwirkt, und sich in dem inaktiven Zustand befinden, wenn das Zusammenklappen ausgeführt wird, indem man auf die seitlichen Anordnungen (1a, 1b) einwirkt.

3. Kinderwagenrahmen nach Anspruch 2, **dadurch gekennzeichnet, dass** die selektiven Koppelmittel aus einer biegsamen Verbindung (27a, 27b) bestehen, die sich im aktiven Zustand befindet, wenn sie zugbelastet wird, und die sich im inaktiven Zustand befindet, wenn sie druckbelastet wird.

4. Kinderwagenrahmen nach Anspruch 3, **dadurch gekennzeichnet, dass** die biegsame Verbindung (27a, 27b) zu der Gruppe gehört, die Folgendes umfasst:
- Gurte;
- Ketten;
- Seile;
- gelenkige Schwingarmanordnungen.

5. Kinderwagenrahmen nach einem der Ansprüche 1 bis 4, **dadurch gekennzeichnet, dass** die Abstandsregelmittel eine Anordnung von mindestens zwei Stäben umfassen, die mindestens eine Querstrebe (11) bilden, welche die seitlichen Anordnungen (1a, 1b) verbindet.

6. Kinderwagenrahmen nach Anspruch 5, **dadurch gekennzeichnet, dass** die mindestens eine Querstrebe (11) die hinteren Verstrebungen (3a, 3b) der seitlichen Anordnungen (1a, 1b) verbindet.

7. Kinderwagenrahmen nach Anspruch 3 und einem der Ansprüche 4 und 6, **dadurch gekennzeichnet, dass** die oberen Enden der Abstandsregelmittel ein Führungsteil tragen, das auf der entsprechenden hinteren Verstrebung (3) gleitet und durch die biegsame Verbindung (27) mit einer Schubstange verbunden ist, die eine vordere Verstrebung (2) und die hintere Verstrebung (3) der entsprechenden seitlichen Anordnung (1) verbindet.

8. Kinderwagenrahmen nach einem der Ansprüche 1 und 2, **dadurch gekennzeichnet, dass** die selektiven Koppelmittel mindestens eine Gleitverbindung eines Verbindungsteils (94) in einer Rille (9211) umfassen, wobei die selektiven Koppelmittel sich in dem aktiven Zustand befinden, wenn das Verbindungsteil (94) an einem Ende der Rille (9211) anschlägt, und sich in dem inaktiven Zustand befinden, wenn das Verbindungsteil (94) in der Rille (9211) gleiten kann.

9. Kinderwagenrahmen nach Anspruch 8, **dadurch gekennzeichnet, dass** die Rille (9211) aus einem Element einer der seitlichen Anordnungen (1a, 1b) gebildet ist, und dass das Verbindungsteil am Ende eines Stabs einer Querstrebe montiert ist, welche die Abstandsregelmittel bildet.

10. Kinderwagenrahmen nach einem der Ansprüche 1 bis 9, **dadurch gekennzeichnet, dass** er einen Mechanismus zum Verriegeln der zusammengeklappten Position des Rahmens umfasst, der Folgendes aufweist:
- erste Verriegelungsmittel in einer zusammengeklappten Position eines der seitlichen Elemente (1a, 1b);
- zweite Verriegelungsmittel in einer zusammengeklappten Position der Abstandsregelmittel;
- Entriegelungsmittel, die das gleichzeitige Entriegeln der ersten und zweiten Verriegelungsmittel sicherstellen.

11. Kinderwagen, **dadurch gekennzeichnet, dass** er einen Rahmen nach einem der vorhergehenden Ansprüche und Stütz- und Haltemittel für mindestens ein abnehmbares Kindertransportelement umfasst.

12. Kinderwagen nach Anspruch 11, **dadurch gekennzeichnet, dass** das abnehmbare Kindertransportelement zu der Gruppe gehört, die Folgendes umfasst:
- zusammenklappbare Einlagen;
- nicht zusammenklappbare Einlagen;
- Schalen.
